# EUROPEAN PATENT APPLICATION

(11) **EP 1 986 426 A2**
(43) Date of publication of application: **29.10.2008**
(21) Application number: 08004944.8
(22) Date of filing: 17.03.2008
(51) Int. Cl.: H04N 5/50

(54) **Television tuner module**

(30) Priority: 23.04.2007 JP 2007112746
(71) Applicant: ALPS ELECTRIC CO., LTD., Tokyo 145-8501 (JP)
(72) Inventor: Obara, Katsutoshi, Tokyo 145-8501 (JP)
(74) Representative: Klunker . Schmitt-Nilson . Hirsch

(57) **Abstract**

A television tuner module (1) includes a television-signal receiving circuit (2), a digital demodulator IC (3), and a backend IC (4) that functions as an MPEG decoder and that has a function of controlling digital reception. Between the television-signal receiving circuit (2) and the digital demodulator IC (3), a bus switch (5) that performs switching between a digital-reception control line and an analog-reception control line is provided. A set-side microcomputer (21) is connected to the bus switch (5) via an analog-reception control bus (10). An N-channel enhancement MOSFET (11) is provided on the analog-reception control bus (10), which becomes open as viewed from the set side when a module-side power supply is turned off.

## Description

### BACKGROUND OF THE INVENTION

### 1. Field of the Invention

The present invention relates to television tuner modules that are capable of receiving mixed analog/digital signals.

### 2. Description of the Related Art

In a proposed arrangement of a television tuner module that is capable of receiving mixed analog/digital signals, in order to suppress the effect of noise generated from a digital circuit during reception of an analog signal, a control signal line extending from a control block, such as a TV set or a set-top box, is provided separately from a line that is used during reception of a digital signal. Such an arrangement is described, for example, in Japanese Unexamined Patent Application Publication No. 2000-224061.

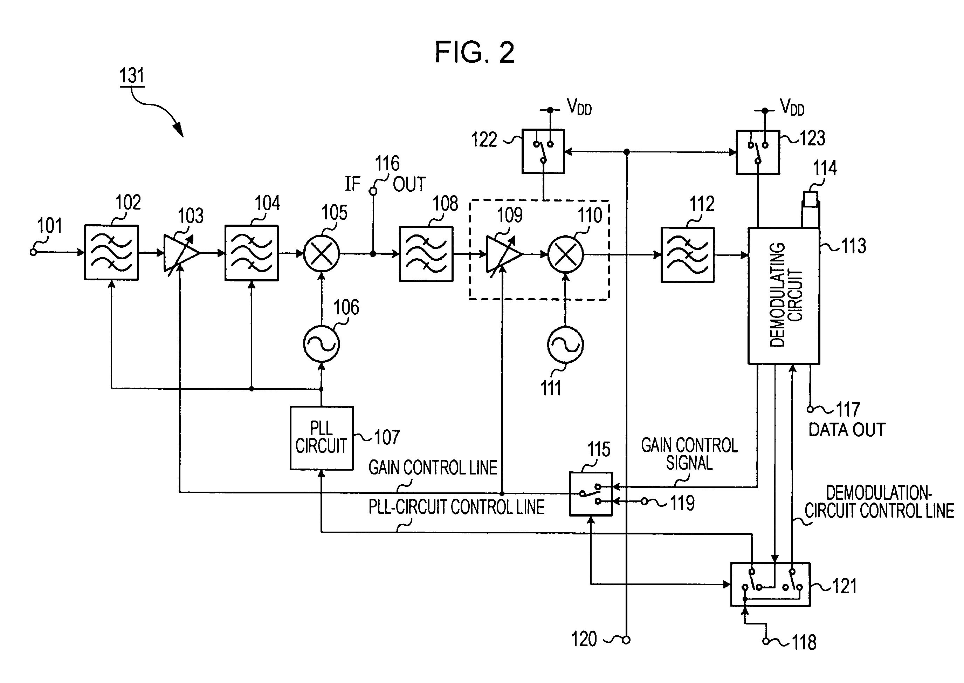

Fig. 2 is a block diagram of a front-end in an analog/digital broadcast receiver. A reception terminal 101 receives a broadcast signal including both an analog modulated wave and a digital modulated wave. The received broadcast signal is passed through a bandpass filter 102, and a signal output from the bandpass filter 102 is amplified in a high-frequency amplifier 103. The amplified signal is passed through a bandpass filter 104, and a signal output from the bandpass filter 104 is input to a mixer 105, where the signal is multiplied with a signal fed from a local oscillation circuit 106 and is thereby converted into a first intermediate frequency wave. The oscillation frequency of the local oscillation circuit 106 is controlled by a PLL (phase-locked loop) circuit 107. The first intermediate frequency wave is passed through a bandpass filter 108, and a signal output from the bandpass filter 108 is amplified by an intermediate-frequency amplifier 109, and the amplified signal is input to a mixer 110, where the signal is converted into a second intermediate frequency wave using a signal fed from a local oscillation circuit 111. Furthermore, the second intermediate frequency wave is passed through a low-pass filter 112, and a signal output from the low-pass filter 112 is input to a demodulating circuit 113. The demodulating circuit 113 operates on the basis of a clock signal generated by a crystal oscillator 114. The demodulating circuit 113 demodulates a digital modulation signal on the basis of a control signal input from a control terminal 118 through a demodulating circuit control line, and outputs resulting demodulated data from an output terminal 117.

During reception of an analog broadcast signal, a selection signal for reception of an analog modulated wave is input from an external terminal 120. Then, the control terminal 118 is disconnected from the modulation circuit 113 by one of switching circuits in a control-line selecting circuit 121, and the control terminal 118 is connected to the PLL circuit 107 by the other switching circuit in the control-line selecting circuit 121. Furthermore, an intermediate-frequency power-supply control circuit 122 disconnects a circuit formed of the intermediate-frequency amplifier 109 and the mixer 110 from a power supply line VDD, and a demodulating circuit power-supply control circuit 123 disconnects the demodulating circuit 113 from the power supply line VDD. Furthermore, a gain-control-line selecting circuit 115 connects the external terminal 119 to the high-frequency amplifier 103 and the intermediate-frequency amplifier 109.

Through the switching described above, in an arrangement where mixed analog/digital signals can be received, it is possible to suppress an interference wave caused by a clock signal or the like during reception of an analog broadcast signal.

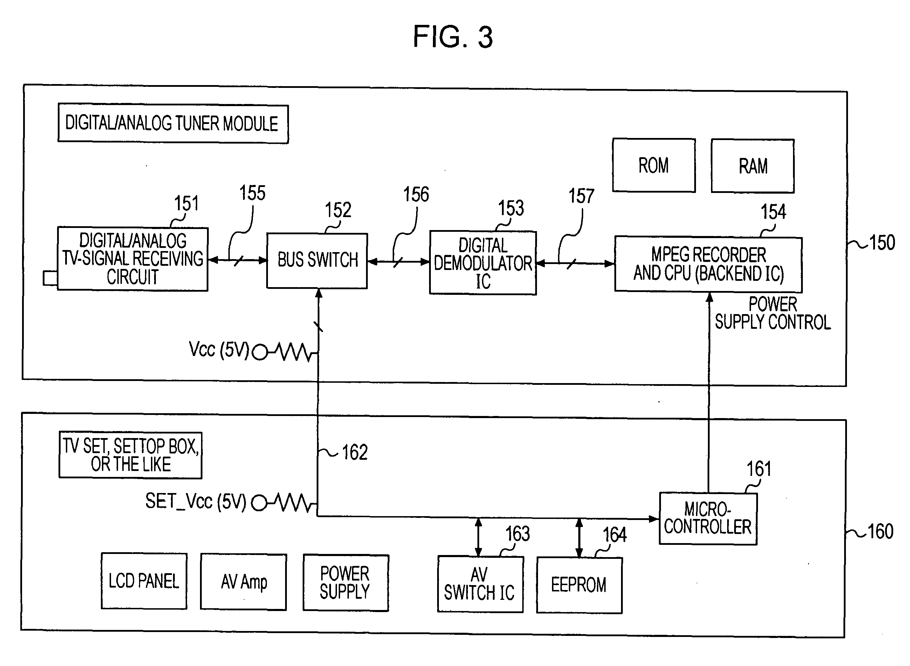

Fig. 3 shows an example configuration in a case where, during reception of an analog broadcast signal, analog reception is controlled by a microcomputer provided in a control block, such as a TV set or a set-top box, via an analog-reception control signal line (I²C bus).

In a television tuner module 150, a front-end 151 is connected to a digital modulator IC 153 via a bus switch 152, and the digital demodulator IC 153 is connected to a backend IC 154 including an MPEG (Moving Picture Experts Group) decoder and a CPU (central processing unit). The front-end 151 is connected to the bus switch 152 via a digital/analog-reception control bus 155, the bus switch 152 is connected to the digital demodulator IC 153 via a digital-reception control bus 156, and the digital demodulator IC 153 is connected to the backend IC 154 via a digital-reception/demodulation control bus 157. Each of these control buses is implemented, for example, by an I²C bus.

In a control block 160, such as a TV set or a set-top box, a microcomputer 161 is provided. The microcomputer 161 controls operations in the control block 60, and sends control signals for controlling analog reception to the front-end 151. The microcomputer 161 is connected to the bus switch 152 via an analog-reception control bus 162. The bus switch 152 is switched so that it is connected to the digital-reception control bus 156 during digital reception and so that it is connected to the analog-reception control bus 162 during analog reception.

In the configuration described above, during digital reception, the bus switch 152 is switched so that it is connected to the digital-reception control bus 156, so that a control signal for controlling digital reception is fed from the backend IC 154 to the front-end 151. On the other hand, during analog reception, the bus switch 152 is switched so that it is connected to the analog-reception control bus 162, so that a control signal for controlling analog reception is fed from the microcomputer 161 to the front-end 151.

As shown in Fig. 3, the analog-reception control bus 162 is pulled up by a set-side power supply SET-Vcc (e.g., 5V) in the control block 160, and is pulled up by a module-side power supply Vcc (e.g., 5V) in the television tuner module 150. Furthermore, in the control block 160, the analog-reception control bus 162 can also be used as a control line for controlling other devices to be controlled (e.g., an AV (audio/video) switch 163 and an EEPROM 164 (electrically erasable and programmable read-only memory)) from the microcomputer 161.

However, in the television tuner module according to the related art described above, it has been difficult to save power consumption by causing the set side (control-block side) to enter a set-standby state, in which a module-side power supply is turned off and in which only a microcomputer is kept ready for operation on the set side. As described above, the analog-reception control bus 162 is pulled up by the set-side power supply SET-Vcc and the module-side power supply Vcc. When only the module-side power supply Vcc is turned off, a current is caused to flow into the module side to cause a voltage drop. Thus, on the set side, communication between the microcomputer 161 and the AV switch IC 163, the EEPROM 164, and so forth via the analog-reception control bus 162 becomes disabled. Therefore, in order to enable communication between the microcomputer 161 and other devices via the analog-reception control bus 162 on the set side, the module-side power supply Vcc has to be constantly kept ON. This prohibits reduction of power consumption.

### SUMMARY OF THE INVENTION

The present invention provides a television tuner module in which even when a module-side power supply is turned off, communication between a microcomputer and a device connected to an analog-reception control line can be maintained on a set side, so that it is possible to save power consumption by causing the set side to enter a standby mode with the module-side power supply turned off.

A television tuner module according to the present invention includes a television-signal receiving circuit for receiving a television signal; a control circuit for controlling reception status of the television-signal receiving circuit; a first control line for transmitting a reception control signal from the control circuit to the television-signal receiving circuit; a second control line for transmitting another reception control signal from a television set or set-top box to the television-signal receiving circuit; and switching means provided on the second control line, the switching means being turned on when a television-tuner-module-side power supply is turned on, and the switching means becoming open as viewed from the television set or set-top box when the television-tuner-module-side power supply is turned off.

In this configuration, with the switching means provided on the second control line for transmitting the reception control signal from the television set or set-top box to the television-signal receiving circuit, the switching means becoming open as viewed from the television set or set-top box when the television-tuner-module-side power supply is turned off, the effect on the second control line or the television-set or set-top-box side is suppressed when the television-tuner-module-side power supply is turned off, so that it is possible to perform communication using the second control line on the set side.

In the television tuner module, the switching means may be formed of an N-channel MOSFET (metal-oxide-semiconductor field-effect transistor) having a source connected to a module side of the second control line, a drain connected to a television-set or set-top-box side of the second control line, and a gate connected to the television-tuner-module-side power supply.

In this case, when the television-tuner-module-side power supply is turned off, the N-channel MOSFET is turned off and becomes open as viewed from the television set or set-top box.

In the television tuner module, the television-signal receiving circuit may be capable of receiving mixed analog/digital signals. For example, it is possible to feed a reception control signal for controlling digital reception from a first control circuit to the television-signal receiving circuit via the first control line, and to feed a reception control signal for controlling analog reception from the television set or set-top box to the television-signal receiving circuit via the second control line.

According to the present invention, even when the module-side power supply is turned off, the effect on the analog-reception control line can be suppressed, so that it is possible to maintain communication between a microcomputer and a device. Accordingly, it is possible to cause the set side to enter a standby mode with the module power supply turned off. This serves to reduce power consumption.

### BRIEF DESCRIPTION OF THE DRAWINGS

Fig. 1 is a diagram showing the configuration of a television tuner module according to an embodiment of the present invention;
Fig. 2 is a block diagram of a front-end in an analog/digital broadcast receiver according to the related art; and
Fig. 3 is a diagram showing the configuration of a television tuner module according to the related art, in which an analog-reception control line and a digital-reception control line are provided separately.

### DESCRIPTION OF THE PREFERRED EMBODIMENTS

Now, an embodiment of the present invention will be described in detail with reference to the accompanying drawings.

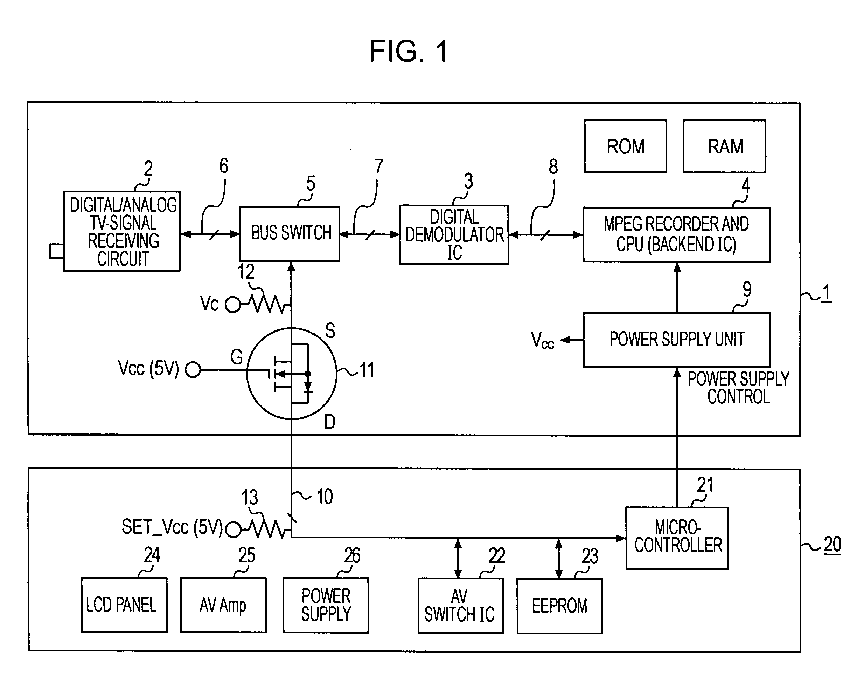

Fig. 1 is a diagram schematically showing the configuration of a television tuner module according to an embodiment of the present invention, in which analog reception is controlled from a control block, such as a TV set or a set-top box.

A television tuner module 1 includes a television-signal receiving circuit 2 that is capable of receiving mixed analog/digital signals, a digital demodulator IC 3 that digitally demodulates a modulation signal output from the television-signal receiving circuit 2, and a backend IC 4 that functions as an MPEG decoder and as a control circuit having a digital-reception controlling function. Between the television-signal receiving circuit 2 and the digital demodulator IC 3, a bus switch 5 for switching between a digital-reception control line and an analog-reception control line is provided.

The television-signal receiving circuit 2 and the bus switch 5 are connected to each other via a digital/analog-reception control bus 6, the bus switch 5 and the digital demodulator IC 3 are connected to each other via a digital-reception control bus 7, and the digital demodulator IC 3 and the backend IC 4 are connected to each other via a digital-reception/demodulation control bus 8. In this embodiment, each of these buses 6, 7, and 8 is implemented by an I²C bus formed of two bidirectional open-collector signal lines pulled up by resistors, one of the signal lines being used for serial data and the other signal line being used for a serial clock.

The bus switch 5 is connected to the digital-reception control bus 7, which serves as a first control line, on the side of the backend IC 4, and is connected to the analog-reception control bus 10, which serves as a second line, on the side of the control block 20 (on the set side). In this embodiment, an N-channel enhancement MOSFET 11 provided on the analog-reception control bus 10 makes it possible to disconnect the television tuner module 1 from the control block 20. The N-channel enhancement MOSFET 11 has a source terminal connected to a module-side portion of the analog-reception control bus 10, a drain terminal connected to a set-side portion of the analog-reception control bus 10, and a gate terminal connected to a module power supply Vcc. When the module power supply Vcc is ON, the module side and the set side are electrically connected to each other. On the other hand, when the module power supply is OFF, the module side and the set side are electrically disconnected from each other. The analog-reception control bus 10 is pulled up by a resistor 12 on the module side, and is pulled up by a resistor 13 on the set side.

The control block 20 includes a microcomputer 21 that controls a device on the set side via one of buses connected to the microcomputer 21. Since this bus is used as the analog-reception control bus 10, although the bus is used for communications for purposes other than controlling analog reception with devices on the set side, the bus is referred to as the analog-reception control bus 10 for convenience of description. In the example shown in Fig. 1, an AV switch IC 22 and an EEPROM 23 are connected to the analog reception control bus 10 so that the AV switch IC 22 and the EEPROM 23 can communicate with the microcomputer 21. The microcomputer 21 is connected to other devices on the set side, such as an LCD (liquid crystal display) panel 24, an AV amplifier 25, and a power supply 26, via a bus or the like (not shown).

Next, an operation of the embodiment configured as described above will be described.

In the television tuner module 1, during its operation, the module power supply Vcc is supplied to each device in the television tuner module 1 from a power supply unit 9. The ON/OFF of the power supply unit 9 is controlled from the set side by the microcomputer 21. When the power supply unit 9 is turned on, the module power supply Vcc is applied to the gate terminal of the MOSFET 11. In the case of an enhancement MOSFET, when a gate voltage is applied, a channel is formed so that the transistor is turned on. Thus, when the module power supply Vcc is ON, devices on the side of the television tuner module 1 and devices on the side of the control block 20 can communicate with each other via the analog-reception control bus 10.

In the case of digital reception, the bus switch 5 connects a digital-reception control line (6, 7, 8) to the television-signal receiving circuit 2, and the backend IC 4 controls a circuit to be controlled in the television-signal receiving circuit 2 via the digital demodulator IC 3 using the digital-reception control line (8, 7, 6). For example, in a case where the television-signal receiving circuit 2 is configured as the front-end 131 shown in Fig. 2, the backend IC 4 controls the gains of the high-frequency amplifier 103 and the intermediate-frequency amplifier 109 via the demodulating circuit 113 corresponding to the digital demodulator IC 3 and controls the phase of the PLL control circuit according to a first reception control signal.

On the other hand, in the case of analog reception, the bus switch 5 connects the television-signal receiving circuit 2 to the analog-reception control line 10, and the microcomputer 21 on the set side controls a circuit to be controlled in the television-signal receiving circuit 2 using the analog-signal reception control line 10. For example, in the case where the television-signal receiving circuit 2 is configured as the front-end 131 shown in Fig. 2, the microcomputer 21 controls the gains of the high-frequency amplifier 103 and the intermediate-frequency amplifier 107 and controls the phase of the PLL circuit 107 according to a second reception control signal.

Thus, the analog-reception control bus 10 used for transmission of an analog reception control signal during analog reception becomes separate from the digital-reception control line (6, 7, 8) used for transmission of a digital-reception control signal used during digital reception. Thus, problems such as a clock signal or the like of the digital demodulator IC 3 being superposed as noise on the analog-reception control line can be prevented.

Furthermore, when the module power supply Vcc is turned off, the microcomputer 21 on the set side controls the power supply unit 9 on the module side so that the power supply unit 9 is turned off. As a result of turning off the power supply unit 9, the module power supply Vcc that have been supplied from the power supply unit 9 to the components in the television tuner module 1 is turned off. When the module power supply Vcc has been turned off, the gate voltage applied to the gate terminal of the N-channel enhancement MOSFET 11 on the analog-reception control bus 10, which has been electrically connecting the module side and the set side with each other, becomes 0 V. As described earlier, the channel of the N-channel enhancement MOSFET 11 disappears when no gate voltage is applied, so that the N-channel enhancement MOSFET 11 becomes open between its source and drain terminals.

With the N-channel enhancement MOSFET 11 turned off, the module side becomes open (high impedance) as viewed from the set side. Thus, in contrast to the related art, a current is prevented from flowing to the module side, so that a voltage drop is prevented. Accordingly, even with the module power supply VCC turned off, the voltage on the analog-reception control bus 10 is maintained on the set side. Therefore, the microcomputer 21 can communicate with other devices (22 and 23) connected to the analog-reception control bus 10. Accordingly, it is possible to cause the set side to enter a standby state with the module-side power supply turned off. This serves to reduce power consumption.

The present invention is not limited to the embodiment described above, and various modifications can be made without departing from the spirit of the present invention. For example, switching means provided on the analog-reception control bus 10 to disconnect the module side and the set side from each other may be a switch other than an N-channel enhancement MOSFET 11 as long as the module side becomes high-impedance when viewed from the module side when the switch is off. Furthermore, although the embodiment described above relates to a television tuner module that is capable of receiving mixed analog/digital signals, the present invention can be applied similarly to any arrangement in which reception is controlled using separate lines for a control circuit on the module side and a control circuit on the set side.

The present invention can be applied to broadcast receivers that are capable of receiving mixed analog/digital signals.

## Claims

1. A television tuner module (1) comprising:
a television-signal receiving circuit (2) for receiving a television signal;
a control circuit (4) for controlling reception status of the television-signal receiving circuit;
a first control line (7) for transmitting a reception control signal from the control circuit to the television-signal receiving circuit;
a second control line (10) for transmitting another reception control signal from a television set or set-top box to the television-signal receiving circuit; and
switching means (11) provided on the second control line, the switching means being turned on when a television-tuner-module-side power supply is turned on, and the switching means becoming open as viewed from the television set or set-top box when the television-tuner-module-side power supply is turned off.

2. The television tuner module according to Claim 1, wherein the switching means is formed of an N-channel MOSFET having a source connected to a module side of the second control line, a drain connected to a television-set or set-top-box side of the second control line, and a gate connected to the television-tuner-module-side power supply.

3. The television tuner module according to Claim 1 or 2, wherein the television-signal receiving circuit is capable of receiving mixed analog/digital signals.
